# EUROPEAN PATENT SPECIFICATION

(11) **EP 3 609 206 B1**
(45) Date of publication and mention of the grant of the patent: **13.05.2020**
(21) Application number: 18188119.4
(22) Date of filing: 09.08.2018
(51) Int. Cl.: H04W 4/44, H04W 4/02

(54) **METHOD AND BACKEND STRUCTURE FOR PROVIDING NETWORK BASED COMPUTATIONAL POWER TO A MOVING VEHICLE AND A VEHICLE DESIGNED TO USE THE BACKEND STRUCTURE**
VERFAHREN UND BACKENDSTRUKTUR ZUR BEREITSTELLUNG VON NETZWERKBASIERTER RECHENLEISTUNG FÜR EIN SICH BEWEGENDES FAHRZEUG UND FAHRZEUG ZUR VERWENDUNG DER BACKENDSTRUKTUR
PROCÉDÉ ET STRUCTURE D'ARRIÈRE-PLAN POUR FOURNIR UNE PUISSANCE DE CALCUL EN RÉSEAU À UN VÉHICULE EN MOUVEMENT ET VÉHICULE CONÇU POUR UTILISER LA STRUCTURE D'ARRIÈRE-PLAN

(43) Date of publication of application: 12.02.2020
(73) Proprietor: AUDI AG, 85045 Ingolstadt (DE)
(72) Inventor: THURIMELLA, Anil, 80995 München (DE)

(56) References cited:
- JP-A- 2017 116 979
- US-A1- 2018 063 261
- SHARMA VISHAL ET AL: "Secure and Energy-Efficient Handover in Fog Networks Using Blockchain-Based DMM", IEEE COMMUNICATIONS MAGAZINE, IEEE SERVICE CENTER, PISCATAWAY, US, vol. 56, no. 5, 1 May 2018 (2018-05-01), pages 22-31, XP011683885, ISSN: 0163-6804, DOI: 10.1109/MCOM.2018.1700863 [retrieved on 2018-05-17]

## Description

The invention is concerned with a method for providing network-based computational power to a moving vehicle. The computational power is provided from outside the vehicle by a backend structure of a digital network, e.g. the Internet. The invention also provides the backend structure that may be used for the inventive method. Finally, the invention also provides a motor vehicle that may use the backend structure for obtaining computational power. A backend structure may be based on a server computer and/or a computer center and/or a computer cloud structure and/or a fog computing structure.

A vehicle, e.g. a passenger vehicle, may be provided with such additional computational power for example for operating a neural network or for planning a route to a predefined destination. Nowadays, an automotive backend structure is centralized into a computer center or a computer cloud. If a vehicle needs to access an external sensor, e.g. a sensor of a traffic camera, this communication can only be routed through this central backend structure, instead of a peer-to-peer-connection between the vehicle and the sensor. In general, a vehicle can communicate directly only with the central backend structure, such that any communication to a single sensor of the traffic infrastructure or to a so called IOT-device (IOT - internet of things) is difficult as this requires indirect routing through the center backend structure.

However, in the autonomous driving technology, vehicles need to communicate to a large number of items or devices including other vehicles, smart signaling infrastructure, smart homes, charging stations, smart meters, micro grids and power grids, just to name a few. Therefore, routing this communication through a centralized backend structure would mean establishing a bottleneck for the transfer of data for all car-to-x-services and interactions.

Also, in a centralized backend structure approach, a shutdown/downtime in the centralized backend would lead to a large scale problem of car-to-x services.

It would also be desirable to increase computational resources locally near the vehicle so that computations are quicker and resources are readily available. On the other hand, it would be difficult for vehicle manufactures to provide huge computational resources for automated driving computations worldwide.

Also, the so-called distributed AI/machine learning would be advantageous for vehicles. A fog computing infrastructure with distributed backend would fit seamlessly with distributed AI/machine learning.

There is the idea of using so called fog computation or edge computation for traffic infrastructure objects (e.g. traffic cameras) within the environment of automated driving and/or smart city management. The interconnection of vehicles on one side and devices from the internet of things on the other side using fog computing and block-chain technology is described in WO 2017/220115 A1.

One further problem with establishing a direct communication between a vehicle on one side and a large number of different devices of an internet of things on the other side is that securing or encrypting such a communication requires a large amount of encryption keys, one for each peer-to-peer-communication connection.

The document US 2018/0091596 A1 describes a method of using block-chain technology for securing a communication between a vehicle and another device.

Document US 2018/122237 A1 describes a way of coordinating actions of different vehicles on the basis of a block-chain based approach. The method is also described in connection with fog computing that is established on the basis of an internet of things.

Document US 2018/063261 A1 describes a vehicle-to-infrastructure system that allows a vehicle to use resources of a stationary nodes close by the vehide, wherein while the vehicle is moving, the nodes may be switched. The switching may take place whenever the vehicle enters a predefined zone around the node.

Document JP 2017116979 A describes a vehicle control system that accesses a vehicle through a node which is closest to the vehicle.

In a scientific article by Sharma et al. (Vishal Sharma et al., "Secure and Energy-Efficient Handover in Fog Networks Using Blockchain-based DMM", IEEE Communications Magazine, vol. 56, no. 5, 1 May 2018, pages 22-31) a handover mechanism in a fog network using block chains is described. The moment when a handover takes place is dependent on a geographical coverage of the respective resource.

It is an object of the present invention to integrate a moving vehicle into a backend structure in order to support the operation of the vehicle by means of additional computational power that cannot be provided in the vehicle itself and that may be provided by the backend structure.

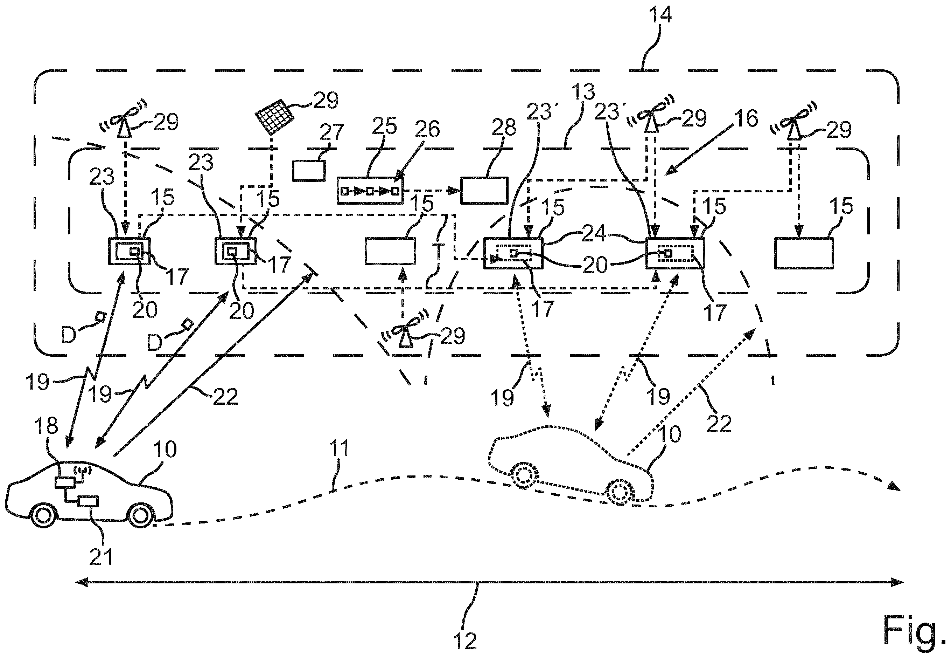

The object is solved by the subject matter of the independent claims. Additional advantageous embodiments are described in the dependent claims, the following description and the figure.

The invention provides a method for enabling network-based computational power to a moving vehicle. Like it is already known from the prior art, the computational power is provided by a backend structure of the network. In other words, the computational power is provided outside the vehicle itself. Only the result of the computations need to be transferred into the vehicle. The necessary network can be provided at least in parts by the internet.

In order to be independent from any centralized computing structure, the backend structure is provided as a fog computing structure comprising a plurality of computing devices that are geographically distributed for example in a predefined area. The computing devices are also interconnected over said network. Instead of a centralized backend structure, this backend structure is therefore implemented by a plurality of computing devices that may run independently from each other and that provide each a fraction of the overall computational power of the backend structure. A single computing device may be implemented, e.g. on the basis of a traffic camera or a traffic light or a smart-home device, e.g. a control element for controlling lights in a house, or a control element for a charging station or a computer. A computing device may also be another vehicle, e.g. a stationary or parking vehicle.

The computational power in provided by processing a computing task by the backend structure on behalf of that one vehicle that is to be supported with computational power. Of course, more than one vehicle may be supported in this way.

At first, the processing of the computing task is performed by at least one of the computing devices of the fog computing structure, wherein this at least one computing device fulfills a predefined proximity criterion regarding the current or present position of the vehicle. In other words, the computing task is performed by at least one such computing device or such computing devices that are close to the vehicle, wherein "close" is defined by the proximity criterion. Therefore, although the backend structure is a fog computing structure with several computing devices spread or distributed over a geographical area, the computing task is processed not by any of these computing devices, but only by those computing devices or one computing device that fulfil the predefined proximity criterion.

Additionally, while the vehicle is moving, at least one follow-up computing device for further processing the computing task is selected that then fulfils the proximity criterion due to the moving of the vehicle. While the vehicle is moving, a computing device that is currently involved in processing the computing task may not fulfil the proximity criterion anymore or in the near future, as the vehicle is moving away from it. On the other hand, the vehicle might approach another computing device for which the proximity criterion may get fulfilled while the vehicle is approaching this computing device. This computing device can therefore be selected as a follow-up computing device. When at least one follow-up computing device is selected, the computing task is transferred to the at least one follow-up computing device for further processing. Transferring the computing task means that one of the formerly involved computing devices or the formerly involved computing device (if only one computing device is involved) stop processing its respective part of the computing task and the processing of the computing task is continued by the at least one follow-up computing device. The transfer can be implemented by transferring task data that describes the current state of the processing of the computing task. While the vehicle is continuing moving, another at least one follow-up computing device may be selected and the computing task may be transferred further to this new follow-up computing device. In other words, the members of the group of computing devices for processing the computing task change while the vehicle is moving through the area of the fog computing structure. The group of computing devices involved in processing the computing task moves along with the vehicle such that the vehicle is surrounded by or connected to such computing devices that fulfil the proximity criterion.

The invention provides the advantage that although the backend structure is implemented as a fog computing structure, the actual computing task for the vehicle is processed only by such computing devices that are within a predefined proximity of the vehicle as defined by the proximity criterion, such that a communication or data exchange between the vehicle and theses computing devices does not require transferring these data over a large distance and/or with large latency. Furthermore, no bottleneck regarding communication may appear.

In the invention, the proximity criterion comprises that a transfer time of data between the respective computing device on one side and the vehicle on the other side is smaller than a respective predefined threshold. In other words, the proximity is defined on the basis transfer time (i.e. latency). Limiting the transfer time provides for the advantage that only fast transfer paths of the network are used.

The invention also comprises embodiments that provide for additional advantages.

In one embodiment, the proximity criterion comprises that a geographical distance of data between the respective computing device on one side and the vehicle on the other side is smaller than a respective predefined threshold. In other words, the proximity is defined on the basis of geographical distance and transfer time (i.e. latency). Limiting the geographical distance provides for the advantage that only a limited transfer part within the network is used.

In one embodiment, the computing task comprises providing computational results to the vehicle. In other words, the computing task involves a communication or data exchange between the at least one computing device on one side and the vehicle on the other side. By means of the proximity criterion, this data transfer is possible within a predefined transfer time as each computing device involved in processing the computing task is not further away than set by the proximity criterion.

In one embodiment, the vehicle reserves the at least one follow-up computing device for its computing task by means of a block-chain entry in a block-chain for managing the computing devices. In other words, before the computing task is transferred to any follow-up computing device, this computing device is reserved by the vehicle for the use by the vehicle. This ensures that when the transfer of the computing task is initiated, the follow-up computing device is actually available for the computing task. This ensures that colliding interests of two vehicles that try to select the follow-up computing device for their respective computing task occur.

In one embodiment the computing task comprises performing a machine learning algorithm for training and/or running an artificial neural network (ANN). Additionally or alternatively the computing task comprises an autonomous driving functionality for the vehicle. Additionally or alternatively the computing task comprises at least one safety and/or security functionality of the vehicle. These computing tasks profit from additional computational power that cannot be provided within the vehicle itself. On the other hand, by using only computing devices that fulfil the proximity criterion, using the external computational power does not lead to latency issues although a fog computing structure as used. Any computing device involved in the computing task is in close proximity as defined by the proximity criterion. One advantage from this is that safety and/or security related computations can still be performed locally.

With regard to performing machine learning, artificial intelligence (Al) and/or machine learning can be performed on the basis of distributed machine learning.

In one embodiment, the vehicle exchanges data with the at least one computing device that is currently processing its computing task, wherein the exchange of the data is performed by means of a peer-to-peer communication. In other words, no centralized communication management is involved. This provides for the advantage that any data that is exchanged in connection with the computing task can be directly transferred between the vehicle on one side and the computing device on the other side without the need of a centralized backend structure.

In one embodiment, the peer-to-peer communication is encrypted. This provides for the advantage that even sensitive data, e.g., personal data regarding a passenger of the vehicle and/or the position of the vehicle, may be exchanged between the vehicle and the at least one computing device involved in the processing of the computing task. Encrypting the communication also provides for the advantage that no manipulation of the exchanged data is possible. By means of a cryptographic technique, e.g. tokens and/or a special protocol, a communication connection and/or a data transfer between the resources (computing devices) and the vehicle may be secured. For example cryptographic tokes may be used to reserve a computing device near the vehicle (i.e. fulfilling the proximity criterion). This cryptography may also be an enabler for continuous block chains.

In one embodiment electric energy for running the computing devices of the fog computing structure is provided by at least one respective local renewable energy source that is provided within a predefined radius of the respective computing device. In other words, the distance for transferring energy for running the computing devices is reduced or limited to the predefined radius. Thus, an operator running a renewable energy source may contribute electric energy for running the backend structure. This can encourage a larger number of operators to enter energy business for electric cars as well as improve the availability and reduce the price of the energy for vehicles. This would provide a solution for the future energy needs for automated vehicles. Additionally or alternatively, leasing of computational resources (computing devices) may be made possible. For example, an owner of a computing device may subscribe the computational resource (user's computing device) to an automated driving platform having an implementation running the inventive method. An extreme example: A vehicle may use the computing resources of vehicles that are parked. All those parking vehicles may be powered by solar/wind energy generations within them.

The invention also comprises a motor vehicle that is able to use a fog computing structure in a way that is accordance with the inventive method.

The inventive motor vehicle is designed to provide at least one functionality that is based on a computing task performed by a network-based backend structure. Such a functionality can comprise performing a machine learning algorithm for training and/or running an artificial network and/or an autonomous driving functionality for the vehicle and/or at least one safety and/or security functionality of the vehicle.

According to the invention the motor vehicle comprises a control device that is designed to repeatedly reserve at least one computing device of the backend structure. The control device reserves only such computing devices that fulfil a predefined proximity criterion. The control device is further designed to set up a peer-to-peer communication to the at least one reserved computing device and to exchange data regarding the computing task over the peer-to-peer communication while the at least one reserved computing device is processing the computing task. As the control device is designed to do the reservation repeatedly, especially while the vehicle is moving, as a result the set of computing devices involved in processing the computing task is repeatedly updated or changed such that the set of computing devices only comprises computing devices that fulfil the proximity criterion. In other words, the peer-to-peer communication to the at least one reserved computing device involves the exchange of data only to such computing devices that fulfil the proximity criterion. This ensures a reliable and secure communication. The reservation can be based on a block-chain as it has already been described.

The invention also comprises said backend structure based on several computing devices that are interconnected over a network. The computing devices form a fog computing structure. A device platform may be provided in the backend. A computational resource (computing device) may subscribe to the platform so that it can be an element in the fog computing.

Each computing device is designed to accept a reservation from a vehicle when the computing device fulfils a predefined proximity criterion with regard to the vehicle. Each computing device is further designed to take over a computing task from another one of the computing devices and to continue the computing task at a point where the former computing device stopped processing the computing task. the reservation can be coordinated by a block-chain manager that operates a block-chain for managing the reservation. Each computing device may communicate with the vehicle on the basis of a peer-to-peer communication as has already been described. To secure the buildup of a Blockchain, cryptographic tokens generated by a hardware security module (HSM) or a quantum computer may be used. Additionally or alternatively, specially designed networks with dedicated cryptographic protocols may be used.

The invention also comprises embodiments that comprise a combination of features of those embodiments that have already been described.

In the following, an implementation example of the invention is described. The figure illustrates:
- Fig.: a backend structure based on a fog computing structure together with a motor vehicle that uses the backend structure for obtaining computational power.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figure identical reference signs indicate elements that provide the same function.

The figure (Fig.) shows a motor vehicle 10 that may be, e.g., a passenger vehicle or a truck. Vehicle 10 may be moving along a route 11 through an area 12. The fig. shows vehicle 10 at two different points in time, wherein a later point in time is illustrated in the fig. by showing vehicle 10 with dashed lines. While vehicle 10 is moving, vehicle 10 may be connected to a backend structure 13 which may be provided in a data network 14. Network 14 is based on the internet. The backend structure 13 may comprise several computing devices 15 that are geographically distributed over the area 12. A computing device 15 can be provided in the form of e.g. a computer of an infrastructure object, e.g. a traffic camera or a signaling light, or a smart home device or a charging station.

The plurality of computing devices 15 constitutes a fog computing structure 16. In other words, the backend structure 13 is a decentralized server structure. While vehicle 10 is moving, it may use the computational power 17 of one or some of the computing devices 15. To this end, a communication unit 18 of vehicle 10 may establish a peer-to-peer connection 19 to the computing devices 15 that it is using. The communication unit 18 can be based on a car-to-x communication technology, e.g. WiFi.

By means of the computational power 17 of the computing devices 15 a computing task 20 may be processed for vehicle 10 outside vehicle 10. Within vehicle 10 an electronic control unit or a control device 21 may select which computing devices 15 may currently be used for processing the computing task 20. To this end, a proximity criterion 22 may be applied which selects those computing devices 15 for computing or processing computing task 20 which are within a predefined geographical distance and/or who may provide a peer-to-peer connection 19 with a latency below a predefined threshold.

The figure illustrates how the group 23 of selected computing devices 15 may change into a group 23' while vehicle 10 is moving through area 12, as other computing devices 15 then fulfil the proximity criterion 22. A transfer T of the computing task 20 from a computing device 15 that formerly fulfilled the proximity criterion 22 to a selected follow-up computing device 15 that now fulfils the proximity criterion 22 may be based on transferring processing data or task data that describes the current state of the processing of the computing task.

In order to reserve a new follow-up computing device 24 for continuing the processing performed by computing device 21, computing device 21 may use a block-chain manager 25 that is operating a block-chain 26 for reserving the follow-up computing devices 15 of the follow-up group 23'. For establishing a cryptographically secured peer-to-peer connection 19, a cryptographic key management 27 may be provided by the backend structure 13. A resource manager 28 may be added in the backend structure 13 in order to enable the sharing of the computing devices 15 among several vehicles wherein the resource manager 28 may rely on reservation information from the block-chain 26.

Overall a decentralized automotive backend structure is shown that is based on the combination of fog computing and block-chain communication. Based on this, an arbitrary computing device 15, that may be part of an IOT (internet of things) may be integrated into the automotive car-to-x environment.

The peer-to-peer connection 19 may be achieved between the vehicle 10 and an arbitrary node or computing device 15. The peer-to-peer connection 19 can be especially based on a block-chain 26. Thus, the vehicle may use computing resources or computing devices 15, i.e. IOT computing notes, and thus the fog computing, preferably within a block-chain communication infrastructure.

For providing electric energy to the computing devices 15, renewable energy sources 29 (e.g. wind generators and/or solar panels) may feed electric energy to the backend structure 13.

The vehicle 10 may use the computing power 17 of the computing devices 15, which may also comprise stationary vehicles. This may solve limitations regarding computing resources for automated vehicles autonomously or automated driving vehicles. Based on block-chain cryptography and/or smart policies, data transfer may be secured with high performance.

As a large variety of computing devices 15 may be connected to vehicle 10, many different functionalities may be presented in vehicle 10 for use by a user of vehicle 10. This may also lead to novel business opportunities that may be added integrating party services not connected to the producer of vehicle 10, wherein the services may comprise computing resources and/or data.

An arbitrary IOT computing device 15 may be integrated into the automotive backend structure 13, especially car-to-x elements that are required for automated driving. They may be integrated without the need of a centralized and/or dedicated backend structure.

This work is based on the following possible additions to the traditional vehicle and backend environments:
A new control device 21 that is provided in vehicle 10 to enable block-chain protocols and/or fog computing on the basis of e.g. a block-chain network.

The following enhances may be provided in the backend structure 13:
- A block-chain manager 25 that is provided for managing the computing devices 15 of the IOT or fog computing structure 16.
- A public key infrastructure (management 27) to enable cryptographic key management for establishing a block-chain 26.
- A resource manager 28 for enabling the sharing of computing resources of the computing devices 15.

Over the connection 19, Data D regarding the computing task 20 may be exchanged between the vehicle on one side and a respective computing device 15 on the other side.

The example illustrates how a decentralized backend structure may be provided for automotive technology.

## Claims

1. Method for providing network-based computational power (17) to a moving vehicle (10), wherein the computational power (17) is provided by a backend structure (13) of the network (14), wherein
- the backend structure (13) is provided as a fog computing structure (16) comprising a plurality of computing devices (15) that are geographically distributed and that are interconnected over the network (14) and
- a computing task (20) is processed by the backend structure (13) on behalf of the vehicle (10) wherein
- while the processing is performed by at least one of the computing devices (15) that fulfills a predefined proximity criterion (22) with regard to the vehicle (10) and
- while the vehicle (10) is moving, at least one follow-up computing device (15) is selected that then fulfills the proximity criterion (22) due to the movement of the vehicle (10) and
- the computing task (20) is transferred to the at least one follow-up computing device (15) for further processing,
**characterized in that**
the proximity criterion (22) comprises that a transfer time of data between the respective computing device (15) and the vehicle (10) is smaller than a predefined threshold.

2. Method according to claim 1, wherein the proximity criterion (22) comprises that a geographical distance between the respective computing device (15) and the vehicle (10) is smaller than a predefined threshold.

3. Method according to any of the preceding claims, wherein the computing task (20) comprises providing computational results to the vehicle (20).

4. Method according to any of the preceding claims, wherein the vehicle (10) reserves the at least one follow-up computing device (15) for further processing its computing task (20), wherein the reservation is performed by means of a block-chain entry in a block-chain (26) that is provided for managing the computing devices (15).

5. Method according to any of the preceding claims, wherein the computing task (20) comprises performing a machine learning algorithm for training and/or running an artificial neural network and/or wherein the computing task comprises an autonomous driving functionality for the vehicle (10) and/or wherein the computing task comprises at least one safety and/or security functionality of the vehicle (10).

6. Method according to any of the preceding claims, wherein the vehicle (10) exchanges data (D) with the at least one computing device (15) that is currently processing its computing task (20), wherein the exchange of the data (D) is performed by means of a peer-to-peer connection (19), that involves no centralized communication management.

7. Method according to claim 6, wherein the peer-to-peer connection (19) is encrypted.

8. Method according to any of the preceding claims, wherein electric energy for running the computing devices (15) of the fog computing structure (16) is provided by at least one respective local renewable energy source (29) that is provided within a predefined radius of the respective computing device (15).

9. Motor vehicle (10) that is designed to provide at least one functionality that is based on a computing task (20) performed by a network-based backend structure (13), wherein
the motor vehicle (10) comprises a control device (21) that is designed to repeatedly reserve at least one computing device (15) of the backend structure (13) that fulfills a predefined proximity criterion (22), set up a peer-to-peer connection (19) that involves no centralized communication management to the at least one reserved computing device (15) and exchange data (D) regarding the computing task (20) over the peer-to-peer connection (19) while the at least one reserved computing device (15) is processing the computing task (15),
**characterized in that**
the proximity criterion (22) comprises that a transfer time between the respective computing device (15) and the vehicle (10) is smaller than a predefined threshold.

10. Backend structure (13) based on several computing devices (15) that are interconnected over a network (14), wherein
each computing device (15) is designed to accept a reservation from a vehicle (10) when the computing device (15) fulfills a predefined proximity criterion (22) with regard to the vehicle (10) and take over a computing task (20) from another one of the computing devices (15) and continue processing the computing task (20),
**characterized in that**
the proximity criterion (22) comprises that a transfer time between the respective computing device (15) and the vehicle (10) is smaller than a predefined threshold.

## Patentansprüche

1. Verfahren zur Bereitstellung netzwerkbasierter Rechenleistung (17) an ein sich bewegendes Fahrzeug (10), wobei die Rechenleistung (17) durch eine Backendstruktur (13) des Netzwerks (14) bereitgestellt ist, wobei
- die Backendstruktur (13) als eine Fog-Rechenstruktur (16) bereitgestellt ist, die eine Vielzahl von Rechenvorrichtungen (15) umfasst, die geografisch verteilt sind und über das Netzwerk (14) verschaltet sind, und
- eine Rechenaufgabe (20) durch die Backendstruktur (13) seitens des Fahrzeugs (10) verarbeitet wird, wobei
- während die Verarbeitung durch mindestens eine der Rechenvorrichtungen (15) durchgeführt wird, die ein vorgegebenes Nähekriterium (22) in Bezug auf das Fahrzeug (10) erfüllt und
- während das Fahrzeug (10) sich bewegt, mindestens eine Nachfolge-Rechenvorrichtung (15) ausgewählt wird, die dann das Nähekriterium (22) aufgrund der Bewegung des Fahrzeugs (10) erfüllt und
- die Rechenaufgabe (20) an mindestens eine Nachfolge-Rechenvorrichtung (15) zur weiteren Verarbeitung übertragen wird,
**dadurch gekennzeichnet, dass**
das Nähekriterium (22) umfasst, dass eine Transferzeit von Daten zwischen der jeweiligen Rechenvorrichtung (15) und dem Fahrzeug (10) kürzer als eine vorgegebene Schwelle ist.

2. Verfahren nach Anspruch 1, wobei das Nähekriterium (22) umfasst, dass ein geografischer Abstand zwischen der jeweiligen Rechenvorrichtung (15) und dem Fahrzeug (10) kleiner als eine vorgegebene Schwelle ist.

3. Verfahren nach einem der vorstehenden Ansprüche, wobei die Rechenaufgabe (20) Bereitstellen von Rechenergebnissen an das Fahrzeug (20) umfasst.

4. Verfahren nach einem der vorstehenden Ansprüche, wobei das Fahrzeug (10) die mindestens eine Nachfolge-Rechenvorrichtung (15) für weitere Verarbeitung ihrer Rechenaufgabe (20) reserviert, wobei die Reservierung mittels eines Blockchain-Eintrags in einer Blockchain (26) durchgeführt wird, die zum Verwalten der Rechenvorrichtungen (15) bereitgestellt ist.

5. Verfahren nach einem der vorstehenden Ansprüche, wobei die Rechenaufgabe (20) Durchführen eines Maschinenlernalgorithmus zum Trainieren und/oder Abspielen eines künstlichen neuralen Netzwerks umfasst und/oder wobei die Rechenaufgabe eine autonome Antriebsfunktionalität für das Fahrzeug (10) umfasst und/oder wobei die Rechenaufgabe mindestens eine Sicherheits- und/oder Sicherungsfunktionalität des Fahrzeugs (10) umfasst.

6. Verfahren nach einem der vorstehenden Ansprüche, wobei das Fahrzeug (10) Daten (D) mit der mindestens einen Rechenvorrichtung (15) austauscht, die aktuell ihre Rechenaufgabe (20) verarbeitet, wobei der Austausch der Daten (D) mittels einer Peer-zu-Peer-Verbindung (19) durchgeführt wird, die keine zentralisierte Kommunikationsverwaltung involviert.

7. Verfahren nach Anspruch 6, wobei die Peer-zu-Peer-Verbindung (19) verschlüsselt ist.

8. Verfahren nach einem der vorstehenden Ansprüche, wobei elektrische Energie zum Abspielen der Rechenvorrichtungen (15) der Fog-Rechenstruktur (16) von mindestens einer jeweiligen lokalen erneuerbaren Energiequelle (29) bereitgestellt wird, die innerhalb eines vorgegebenen Radius der jeweiligen Rechenvorrichtung (15) bereitgestellt ist.

9. Motorfahrzeug (10), das gestaltet ist, mindestens eine Funktionalität bereitzustellen, die auf einer Rechenaufgabe (20) basiert, die von einer netzwerkbasierten Backendstruktur (13) durchgeführt wird, wobei
das Motorfahrzeug (10) eine Steuervorrichtung (21) umfasst, die gestaltet ist, mindestens eine Rechenvorrichtung (15) der Backendstruktur (13) wiederholt zu reservieren, die ein vorgegebenes Nähekriterium (22)erfüllt, eine Peer-zu-Peer-Verbindung (19), die keine zentralisierte Kommunikationsverwaltung involviert, zu der mindestens einen reservierten Rechenvorrichtung (15) einzurichten und Daten (D) bezüglich der Rechenaufgabe (20) über die Peer-zu-Peer-Verbindung (19) auszutauschen, während die mindestens eine reservierte Rechenvorrichtung (15) die Rechenaufgabe (15) verarbeitet,
**dadurch gekennzeichnet, dass**
das Nähekriterium (22) umfasst, dass eine Transferzeit zwischen der jeweiligen Rechenvorrichtung (15) und dem Fahrzeug (10) kürzer als eine vorgegebene Schwelle ist.

10. Backendstruktur (13) basierend auf einigen Rechenvorrichtungen (15), die über ein Netzwerk (14) verschaltet sind, wobei
jede Rechenvorrichtung (15) gestaltet ist, eine Reservierung von einem Fahrzeug (10) anzunehmen, wenn die Rechenvorrichtung (15) ein vorgegebenes Nähekriterium (22) in Bezug auf das Fahrzeug (10) erfüllt, und eine Rechenaufgabe (20) von einer anderen der Rechenvorrichtungen (15) zu übernehmen und Verarbeitung der Rechenaufgabe (20) fortzusetzen,
**dadurch gekennzeichnet, dass**
das Nähekriterium (22) umfasst, dass eine Transferzeit zwischen der jeweiligen Rechenvorrichtung (15) und dem Fahrzeug (10) kürzer als eine vorgegebene Schwelle ist.

## Revendications

1. Procédé pour fournir une puissance de calcul en réseau (17) à un véhicule mobile (10), dans lequel la puissance de calcul (17) est fournie par une structure d'arrière-plan (13) du réseau (14), dans lequel
- la structure d'arrière-plan (13) est fournie en tant que structure de calcul de brouillard (16) comprenant une pluralité de dispositifs de calcul (15) qui sont géographiquement répartis et qui sont interconnectés sur le réseau (14) et
- une tâche de calcul (20) est traitée par la structure d'arrière-plan (13) pour le compte du véhicule (10) dans lequel
- lorsque le traitement est effectué par au moins un des dispositifs de calcul (15) qui remplit un critère de proximité prédéfini (22) par rapport au véhicule (10) et
- lorsque le véhicule (10) se déplace, au moins un dispositif de calcul de suivi (15) est choisi, qui remplit ensuite le critère de proximité (22) en raison du mouvement du véhicule (10) et
- la tâche de calcul (20) est transférée à l'au moins un dispositif de calcul de suivi (15) pour un traitement ultérieur,
**caractérisé en ce que**
le critère de proximité (22) comprend le fait qu'un temps de transfert de données entre le dispositif de calcul (15) respectif et le véhicule (10) est inférieur à un seuil prédéfini.

2. Procédé selon la revendication 1, dans lequel le critère de proximité (22) comprend le fait qu'une distance géographique entre le dispositif de calcul (15) respectif et le véhicule (10) est inférieure à un seuil prédéfini.

3. Procédé selon l'une quelconque des revendications précédentes, dans lequel la tâche de calcul (20) comprend le fait de fournir des résultats de calcul au véhicule (20).

4. Procédé selon l'une quelconque des revendications précédentes, dans lequel le véhicule (10) réserve le au moins un dispositif de calcul de suivi (15) pour un traitement ultérieur de sa tâche de calcul (20), dans lequel la réservation est effectuée au moyen d'une entrée de chaîne de bloc dans une chaîne de bloc (26) qui est fournie pour gérer les dispositifs de calcul (15).

5. Procédé selon l'une quelconque des revendications précédentes, dans lequel la tâche de calcul (20) comprend le fait de réaliser un algorithme d'apprentissage machine pour apprendre et/ou faire fonctionner un réseau neuronal artificiel et/ou dans lequel la tâche de calcul comprend une fonctionnalité d'entraînement autonome pour le véhicule (10) et/ou dans lequel la tâche de calcul comprend au moins une sûreté et/ou une fonctionnalité de sécurité du véhicule (10).

6. Procédé selon l'une quelconque des revendications précédentes, dans lequel le véhicule (10) échange des données (D) avec le au moins un dispositif de calcul (15) qui est actuellement en train de traiter sa tâche de calcul (20), dans lequel l'échange des données (D) est effectué au moyen d'une connexion de pair à pair (19), qui n'implique aucune gestion de communication centralisée.

7. Procédé selon la revendication 6, dans lequel la connexion de pair à pair (19) est cryptée.

8. Procédé selon l'une quelconque des revendications précédentes, dans lequel de l'énergie électrique pour faire fonctionner les dispositifs de calcul (15) de la structure de calcul de brouillard (16) est fournie par au moins une source d'énergie renouvelable locale respective (29) qui est fournie au sein d'un rayon prédéfini du dispositif de calcul respectif (15).

9. Véhicule à moteur (10) qui est conçu pour fournir au moins une fonctionnalité qui est basée sur une tâche de calcul (20) effectuée par une structure d'arrière-plan en réseau (13), dans lequel
le véhicule à moteur (10) comprend un dispositif de commande (21) qui est conçu pour réserver de manière répétée au moins un dispositif de calcul (15) de la structure d'arrière-plan (13) qui remplit un critère de proximité prédéfini (22), mettre en place une connexion de pair à pair (19) qui n'implique aucune gestion de communication centralisée à l'au moins un dispositif de calcul (15) réservé et échanger des données (D) au sujet de la tâche de calcul (20) par la connexion de pair à pair (19) tandis que l'au moins un dispositif de calcul (15) réservé est en train de traiter la tâche de calcul (15),
**caractérisé en ce que**
le critère de proximité (22) comprend le fait qu'un temps de transfert entre le dispositif de calcul (15) respectif et le véhicule (10) est inférieur à un seuil prédéfini.

10. Structure d'arrière-plan (13) basée sur plusieurs dispositifs de calcul (15) qui sont interconnectés sur un réseau (14), dans laquelle
chaque dispositif de calcul (15) est conçu pour accepter une réservation à partir d'un véhicule (10) lorsque le dispositif de calcul (15) remplit un critère de proximité prédéfini (22) par rapport au véhicule (10) et prend en charge une tâche de calcul (20) d'un autre parmi les dispositifs de calcul (15) et continue à traiter la tâche de calcul (20),
**caractérisée en ce que**
le critère de proximité (22) comprend le fait qu'un temps de transfert entre le dispositif de calcul (15) respectif et le véhicule (10) est inférieur à un seuil prédéfini.
